# EUROPEAN PATENT APPLICATION

(11) **EP 1 758 382 A2**
(43) Date of publication of application: **28.02.2007**
(21) Application number: 06118396.8
(22) Date of filing: 03.08.2006
(51) Int. Cl.: H04N 5/445, H04N 7/16

(54) **Signal processing apparatus and method thereof**

(30) Priority: 08.08.2005 KR 20050072434
(71) Applicant: Samsung Electronics Co., Ltd., Suwon-si, Gyeonggi-Do (KR)
(72) Inventor: Lim, Young-sil, suwon-si, Gyeonggi-do (KR); Sohn, Jin-hee, Seoul (KR)
(74) Representative: Clark, Charles Robert

(57) **Abstract**

A broadcast signal receiving apparatus and method which receives broadcast program information and rating level information of broadcast programs. The apparatus having a user input part operative to set a target rating level; a user interface (UI) generator operative to generate a broadcast program information table; and a controller operative [to control the UI generator] to detect a target program, among the broadcast programs, distinctively displayed corresponding to the target rating level and to control the UI generator to display, on the broadcast program information table, information on the detected target program with a different color from information on remaining broadcast programs among the broadcast programs. Thus, a user can check a view-limited program according to a rating level through a broadcast program information table more clearly.

## Description

The present invention relates to a broadcast signal receiving apparatus and a control method thereof, and more particularly, but not exclusively, to a broadcast signal receiving apparatus in which a user checks a view-limited program according to a rating level, and a control method thereof.

Generally, terrestrial, cable and satellite broadcasts transmit additional information together with an image signal and an audio signal. The additional information of a transmitted broadcast program may comprise rating level information.

A TV may support a so-called "view-limiting" function through the rating level information which is transmitted with, or in a broadcast signal. Thus, a conventional TV which supports the view-limiting function of TV programs provides a user with a picture or menu to set a view limit rating level. This is used to perform the view-limiting function of the TV programs transmitted on the basis of the view limit rating level set by a user. Generally, such a function is performed by a V (violence)-chip, which is installed in the TV.

A TV program rating system set by EIA-766 standards, and an MPAA rating system for movies set by the Motion Picture Association of America (MPAA) are presently being widely used as the rating level information.

Generally, a rating system can be classified into two types. The first rating system determines the rating level of the TV programs based on viewers' age, and the second one determines the rating level based on the TV program contents such as violence, sex and language. The two rating systems by EIA-766 standards and MPAA classify the rating level based on viewers' age.

A broadcast signal receiving apparatus such as a TV or a set-top box provides broadcast programs and additional information to a user based on information on the TV programs supplied by a broadcast operator, and additional information such as the rating level.

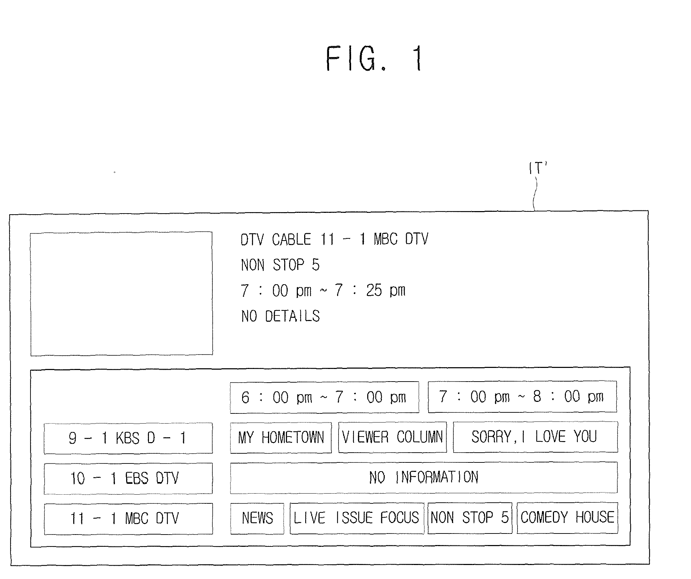

Figure 1 illustrates a broadcast program information table IT' which is supplied by a conventional broadcast signal receiving apparatus. As shown therein, the broadcast signal receiving apparatus provides broadcast programs by channel and time, and additional information on the corresponding broadcast programs through the broadcast program information table IT' to ensure a user's convenience.

However, the conventional broadcast signal receiving apparatus does not provide the rating level information of broadcast programs clearly and distinctively through the broadcast program information table IT'.

Further, when the conventional broadcast signal receiving apparatus provides the rating level as a simple text, a user may hardly recognize the rating level of the broadcast programs through the broadcast program information table IT'.

Accordingly, it is an aim of the present invention to provide a broadcast signal receiving apparatus, which allows a user to check a view-limited program according to a rating level through a broadcast program information table more clearly, and a control method thereof.

Further, it is another aim of the present invention to provide a broadcast signal receiving apparatus, which distinctively displays a view-limited program in consideration with age ranges of viewers, and a control method thereof.

Accordingly, the present invention provides a broadcast signal receiving apparatus which receives broadcast program information and rating level information of broadcast programs, comprising: a user input part operative to set a target rating level; a user interface (UI) generator operative to generate a broadcast program information table; and a controller operative to detect a target program, among the broadcast programs, distinctively displayed corresponding to the target rating level and to control the UI generator to display, on the broadcast program information table, information on the detected target program with a different colour from information on remaining broadcast programs among the broadcast programs.

Advantageously, the UI generator is operative to generate a rating level setting picture to select at least one of a plurality of rating levels, and the controller is operative to set at least one rating level selected by the user input part among the plurality of rating levels displayed on the rating level setting picture, as the target rating level.

Advantageously, the controller is operative to set the rating level selected from the rating level setting picture and a view-limited rating level according to the selected rating level among the plurality of rating levels, as the target rating level.

Advantageously, the broadcast program information table comprises: at least one first broadcast program information block which has a first background color and displays information on the detected target program, and at least one second broadcast program information block which has a second background color different from the first background color, and displays information on the remaining broadcast programs.

Advantageously, the controller is operative to control the UI generator to arrange the first broadcast program information block and the second broadcast program information block based on at least one of time and channel of the broadcast program.

Advantageously, the rating level information is included in at least one of moving picture experts group (MPEG) user data, a program map table (PMT), an event information table (EIT), an aggregate event information table (AEIT), and vertical blanking interval (VBI) data, to be transmitted.

The present invention also provides a method of controlling a broadcast signal receiving apparatus, comprising: setting a target rating level; detecting broadcast program information and rating level information of broadcast programs; detecting a target program, among the detected broadcast programs, which is distinctively displayed corresponding to the target rating level; and displaying a broadcast program information table on which information on the detected target program is displayed with a different color from that of information on remaining broadcast programs among the detected broadcast programs.

Advantageously, setting of the target rating level comprises: displaying a rating level setting picture to select one of a plurality of rating levels; selecting one of the plurality of rating levels displayed on the rating level setting picture; and setting the selected rating level and a view-limited rating level, according to the selected rating level among the plurality of rating levels, as the target rating level.

Advantageously, the broadcast program information table comprises at least one first broadcast program information block which has a first background color, and displays the information on the detected target program; and at least one second broadcast program information block which has a second background color different from the first background color, and displays the information on remaining broadcast programs.

Advantageously, the method further comprises arranging the first broadcast program information block and the second broadcast program information block based on at least one of time and channel of the broadcast programs.

Advantageously, the rating level information is included in at least one of moving picture experts group (MPEG) user data, a program map table (PMT), an event information table (EIT), an aggregate event information table (AEIT) and vertical blanking interval (VBI) data, to be transmitted.

Embodiments of the present invention are now described by way of example and with reference to the accompanying drawings, of which:
Figure 1 illustrates a broadcast program information table which is supplied by a conventional broadcast signal receiving apparatus;
Figure 2 is a schematic control block diagram of a broadcast signal receiving apparatus according to the present invention;
Figure 3 illustrates an example of a broadcast program information table, which is supplied by the broadcast signal receiving apparatus in Figure 2;
Figure 4 illustrates an example of a rating level setting picture which is supplied by the broadcast signal receiving apparatus in Figure 2; and
Figure 5 is a control flowchart of the broadcast signal receiving apparatus according to the present invention.

Reference will now be made in detail to the non-limiting embodiments of the present invention, examples of which are illustrated in the accompanying drawings, wherein like reference numerals refer to like elements throughout.

In the present embodiment, a broadcast signal which is transmitted to a broadcast signal receiving apparatus adopts Advanced Television Systems Committee (ATSC) standards. In the present embodiment, a digital TV is provided as an example of the broadcast signal receiving apparatus.

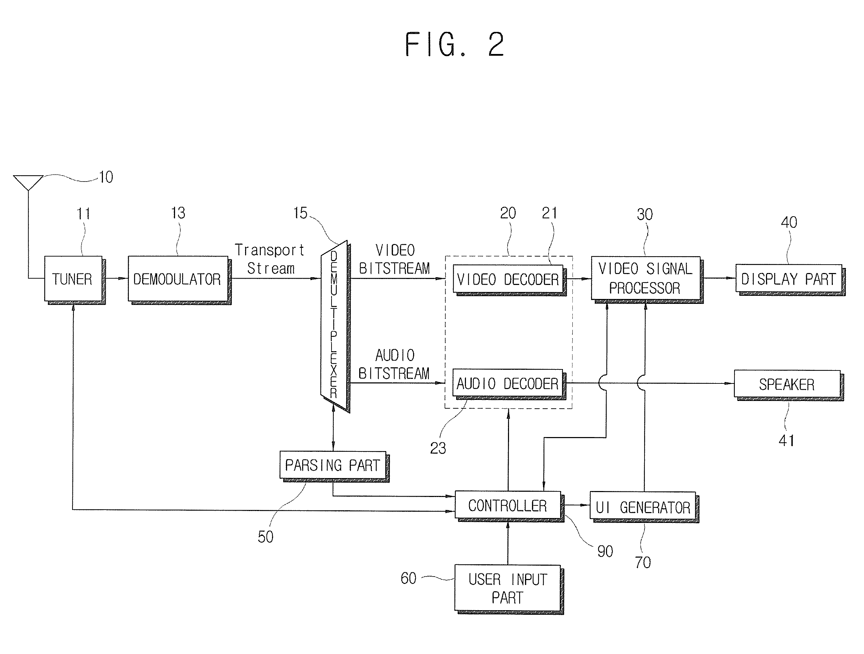

As shown in Figure 2, a digital TV according to the present invention comprises a user input part 60, a user interface (UI) generator 70 and a controller 90. The digital TV according to the present invention may further comprise an antenna 10, a tuner 11, a demodulator 13, a reverse multiplexer 15 (or demultiplexer), a decoder 20, a video signal processor 30, a display part 40, a speaker 41, a parsing part 50 and a memory (not shown).

The tuner 11 tunes the broadcast signal received through the antenna 10 into a broadcast signal with a frequency bandwidth corresponding to a tuning control signal of the controller 90. Here, a digital broadcast signal is transmitted as a transport stream for which a video signal, an audio signal and various data are time-division multiplexed and packetized (or packaged).

The broadcast signal of a certain channel which is tuned by the tuner 11 is demodulated and corrected by the demodulator 13 to be output as the transport stream. Then, the broadcast signal is divided into a video stream, an audio stream and a data stream by the reverse multiplexer 15 to be output as a bit stream.

The video stream, which is divided by the reverse multiplexer 15, is decoded by an MPEG decoder as a video decoder 21 to be processed by the video image signal processor 30 and to be displayed on the display part 40.

The display part 40 may comprise various display modules including a digital light processing (DLP), a liquid crystal display (LCD) and a plasma display panel (PDP). The video signal processor 30 may comprise a scaler, which converts the video stream for satisfying output standards such as a vertical frequency, resolution and a picture ratio of the display part 40.

The audio stream, which is divided by the reverse multiplexer 15, is decoded by an audio decoder 23 for output to the speaker 41.

Meanwhile, the various data streams, which are divided by the reverse multiplexer 15, are parsed by the parsing part 50 to be stored in a predetermined memory (not shown) by data table.

The transmitted data stream comprises guide information and service information of the broadcast program. The ATSC standards define a program and system information protocol (PSIP) for service information such as classification of information transmitted to a corresponding transmission channel and a program guide. In the ATSC standards, channels may be classified without program specific information (PSI) standards as a part of MPEG-2 system standards, and PSI is transmitted to be compatible with MPEG-2 even if it is not necessary.

Broadcast program guide information stored in the memory (not shown) is processed with a currently-tuned video signal through the video signal processor 30 according to a control of the controller 90 (to be described later), to be displayed on the display part 40. Thus, a user may recognize the broadcast program information (ex. EPG information).

The parsing part 50 parses rating level information included in additional data to be stored in a memory (not shown). Here, the rating level information may be checked through user information of MPEG-2, a program map table (PMT) of PSI, a master guide table (MGT) of PSIP and a content advisory descriptor having a value on the rating level defined in a rating region table (RRT) of an event information table (EIT).

In a cable broadcast, the additional information is included in MPEG-2 user data, PMT or an aggregate event information table (AEIT). In an analogue broadcast, the additional information is included in a vertical blanking interval (VBI) to be transmitted.

The digital TV according to the present invention stores an internal channel list and broadcast program information of a corresponding channel. Thus, an embodiment of the present invention may store the rating level information of the channel parsed by the parsing part 50, together with the internal channel list and the broadcast program information of the corresponding channel. For example, in the cable broadcast, if the AEIT is included in an open cable OOB SI, the rating level information is renewed with respect to the internal channel list and the broadcast program of the corresponding channel based on the AEIT information. If the AEIT information is not included therein, a tuner 11 other than the tuner 11 currently tuning the channel is used to search channels and to renew the rating level information of the corresponding channel with respect to the internal channel list and the broadcast program of the corresponding channel.

The user input part 60 is input with a predetermined key signal according to a user's manipulation. The user input part 60 according to the present invention can be provided as a wireless remote control. Here, a user sets a target rating level (described below) through the user input part 60.

The UI generator 70 generates a broadcast program information table IT according to a control of the controller 90 (described below). The broadcast program information table IT generated by the UI generator 70 is synthesized with the video signal currently processed through the video signal processor 30 to be displayed on the display part 40. The UI generator 70 is shown and described as an additional element, separate from the video signal processor 30. Alternatively, the UI generator 70 may be provided as a chip together with the video signal processor 30 such as a scaler.

The controller 90 detects the rating level information among the parsed data stream through the parsing part 50. Also, the controller 90 detects a target program which is distinctively displayed corresponding to the target rating level set through the user input part 60 among the broadcast programs based on the detected rating level information.

The controller 90 controls the UI generator 70 to display the information on the detected target program with a different colour from that of the information on the remaining broadcast programs on the broadcast program information table IT. Accordingly, a user may check the view-limited program according to the rating level on the broadcast program information table IT displayed on the display part 40 more clearly.

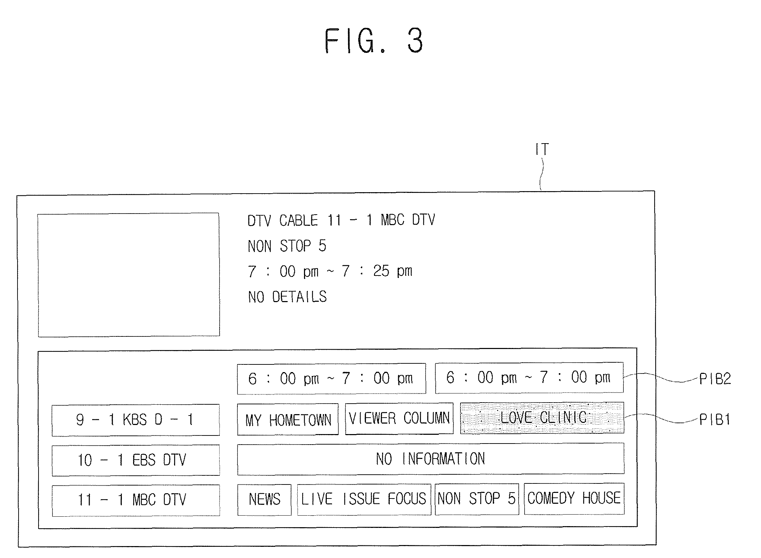

Figure 3 illustrates an example of the broadcast program information table IT supplied by the broadcast signal receiving apparatus according to the present invention. As shown therein, the broadcast program information table IT may comprise at least one first broadcast program information block PIB1 which displays information on the target program distinctively displayed; and at least one second broadcast program information block PIB2 which displays information on the remaining broadcast programs other than the target program among the broadcast programs.

Here, the controller 90 controls the first and second broadcast program information blocks PIB1 and PIB2 to be displayed with different colours, thereby distinguishing the target program according to the set target rating level from other broadcast programs.

As shown in Figure 3, the controller 90 controls the UI generator 70 to arrange the first broadcast program information block PIB1 and the second broadcast program information block PIB2 according to time and/or channel of the broadcast programs.

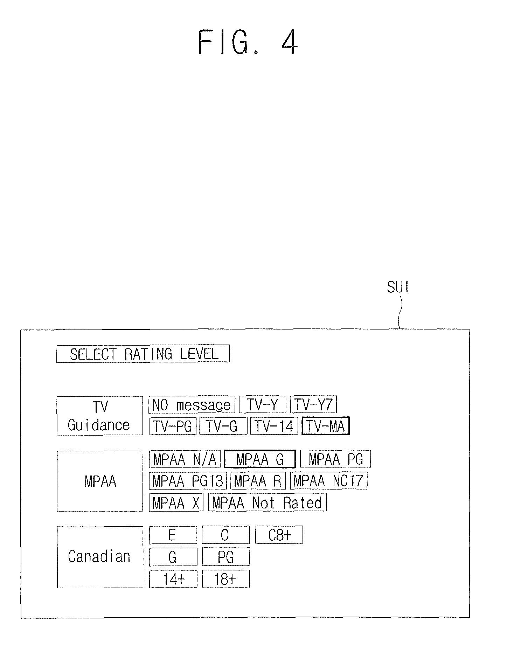

As shown in Figure 4, the UI generator 70 according to the present invention may generate a rating level setting picture SUI to select one of a plurality of rating levels. Figure 4 illustrates MPAA rating levels set for movies by the Motion Picture Association of America (MPAA) and rating levels for TV programs set by EIA-766 standards as an example of the present invention. Figure 4 illustrates an example of the rating level setting picture SUI, but the present invention is not limited thereto. The rating level setting picture SUI may be provided in various designs.

A user may select one or plural rating levels among the ratings levels displayed on the rating level setting picture SUI by manipulating a direction key of the user input part 60. The controller 90 sets the rating level selected by a manipulation of the user input part 60 and the view-limited rating level according to the selected rating level, as the target rating level. For example, when TV-G is selected from the rating levels of the EIA-766 standards (i.e., TV-Y, TV-Y7, TV-G, TV-PG, TV-14 and TV-MA) the selected TV-G and the superior rating levels of the TV-G (i.e., TV-PG, TV-14 and TV-MA) are set as the target rating level.

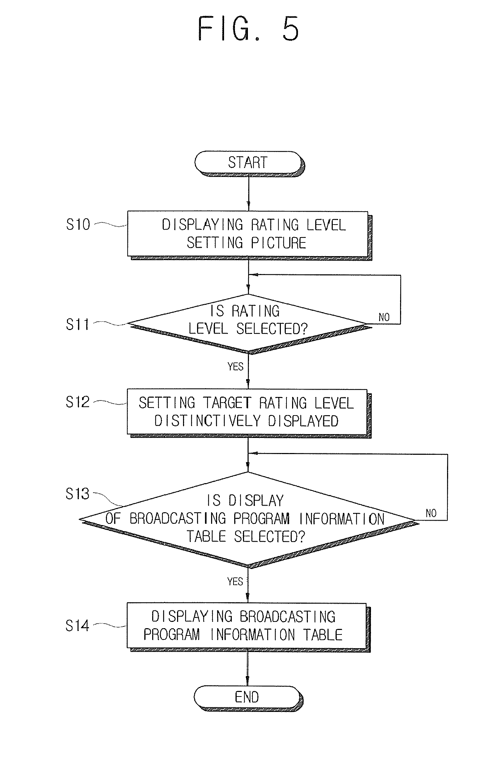

A process of controlling the broadcast signal receiving apparatus according to the present invention is now described with reference to Figure 5.

First, when a user selects the rating level setting picture SUI to be displayed, through the manipulation of the user input part 60, the controller 90 controls the UI generator 70 to display the rating level setting picture SUI on the display part 40 at operation S10.

When a user selects the rating level of the rating level setting picture SUI through the manipulation of the user input part 60 at operation S11, the controller 90 sets the target rating level corresponding to the selected rating level at operation S12. If a user selects the broadcast program information table IT to be displayed at operation S13, through the manipulation of the user input part 60 while the target rating level is set, the controller 90 controls the UI generator 70 to display the broadcast program information table IT on the display part 40 at operation S14. At this time, the information on the target program corresponding to the target rating level is displayed with a different colour from that of the information on the remaining broadcast programs on the broadcast program information table IT displayed on the display part 40.

The present invention may be applicable to a broadcast signal receiving apparatus, which receives signals for terrestrial, cable and/or satellite broadcasts. Also, the present invention may be applicable to a broadcast signal receiving apparatus, which receives an analogue broadcast signal other than the digital broadcast signal. Further, the present invention may be applicable to other channel functions other than a channel converting function, a channel list displaying function, a displaying function of the broadcast program guide information.

It is to be understood that the present invention is applicable to other apparatuses receiving and processing the broadcast signal, such as the set-top box or the like.

Although a few non-limiting embodiments of the present invention have been shown and described, it will be appreciated by those skilled in the art that changes may be made in these embodiments without departing from the principles of the invention, the scope of which is defined in the appended claims and their equivalents.

## Claims

1. A broadcast signal receiving apparatus arranged to receive broadcast program information and rating level information of broadcast programs, comprising:
a user input part arranged to set a target rating level;
a user interface (UI) generator arranged to generate a broadcast program information table; and
a controller arranged,
to detect a target program among the broadcast programs corresponding to the target rating level, and
to control the UI generator to display, on the broadcast program information table, data regarding the detected target program, wherein said data is highlighted to distinguish it from other data.

2. Apparatus according to claim 1, wherein the data is displayed with a different colour from information on remaining broadcast programs among the broadcast programs.

3. The apparatus according to claim 1 or 2, wherein the UI generator is arranged to generate a rating level setting picture to select at least one of a plurality of rating levels, and the controller is arranged to set the target rating level as at least one rating level selected by the user input part among the plurality of rating levels displayed on the rating level setting picture.

4. The apparatus according to claim 3, wherein the controller is arranged to set the target rating level as the rating level selected from the rating level setting picture and a view-limited rating level according to the selected rating level among the plurality of rating levels.

5. The apparatus according to claim 3, wherein the broadcast program information table comprises:
at least one first broadcast program information block having a first background colour and being arranged to display data regarding the detected target program, and
at least one second broadcast program information block having a second background colour different from the first background colour, and being arranged to display data regarding the remaining broadcast programs.

6. The apparatus according to claim 5, wherein the controller is arranged to control the UI generator to arrange the first broadcast program information block and the second broadcast program information block based on at least one of time and channel of the broadcast program.

7. The apparatus according to claim 6, wherein the rating level information is included in at least one of moving picture experts group (MPEG) user data, a program map table (PMT), an event information table (EIT), an aggregate event information table (AEIT), and vertical blanking interval (VBI) data, to be transmitted.

8. A method of controlling a broadcast signal receiving apparatus, comprising:
setting a target rating level;
detecting broadcast program information and rating level information of broadcast programs;
detecting a target program, among the detected broadcast programs, which corresponds to the target rating level; and
displaying a broadcast program information table on which information on the detected target program is displayed to distinguish it from information on remaining broadcast programs among the detected broadcast programs.

9. A method according to claim 8, wherein information on the detected target program is displayed with a different colour from that of information on remaining broadcast programs among the detected broadcast programs.

10. The method according to claim 8 or 9, wherein setting of the target rating level comprises:
displaying a rating level setting picture to select one of a plurality of rating levels;
selecting one of the plurality of rating levels displayed on the rating level setting picture; and
setting the selected rating level and a view-limited rating level, according to the selected rating level among the plurality of rating levels, as the target rating level.

11. The method according to claim 10, wherein the broadcast program information table comprises at least one first broadcast program information block which has a first background colour, and displays the information on the detected target program; and
at least one second broadcast program information block which has a second background colour different from the first background colour, and displays the information on remaining broadcast programs.

12. The method according to claim 11, further comprising arranging the first broadcast program information block and the second broadcast program information block based on at least one of time and channel of the broadcast programs.

13. The method according to claim 9, wherein the rating level information is included in at least one of moving picture experts group (MPEG) user data, a program map table (PMT), an event information table (EIT), an aggregate event information table (AEIT) and vertical blanking interval (VBI) data, to be transmitted.
